# EUROPÄISCHE PATENTANMELDUNG

(11) **EP 1 915 969 A1**
(43) Veröffentlichungstag der Anmeldung: **30.04.2008**
(21) Anmeldenummer: 06022472.2
(22) Anmeldetag: 27.10.2006
(51) Int. Cl.: A61C 8/00

(54) **Dentalimplantat zur Abstützung einer Dentalprothese**

(71) Anmelder: Straumann Holding AG, 4002 Basel (CH)
(72) Erfinder: Menke, Manfred, Dr., 2700 Wr. Neustadt (AT)
(74) Vertreter: Schaad, Balass, Menzl & Partner AG

(57) **Zusammenfassung**

Das erfindungsgemässe Dentalimplantat (10) zur Abstützung einer Dentalprothese an einem Kieferknochen ist mit einem Grundkörper (12) ausgestattet, der einen zur Verankerung im Knochengewebe vorbestimmtem Befestigungsabschnitt (14) und einen gegenüberliegenden Kopfabschnitt (16) aufweist. Der Kopfabschnitt (16) überragt dabei den Befestigungsabschnitt (14) radial bezüglich der Längsachse des Grundkörpers (12) unter Bildung einer Abstützfläche (26), so dass bei einem in den Kieferknochen eingesetzten Zustand der Druck des Dentalimplantats (10) auf den Kieferknochen verringert ist und ein Einsinken des Dentalimplantats (10) in den Kieferknochen auch über längere Zeiträume effektiv verhindert wird.

## Beschreibung

Die vorliegende Erfindung bezieht sich auf ein Dentalimplantat zur Abstützung einer Dentalprothese an einem Kieferknochen gemäss Anspruch 1 und ein Dentalimplantatsystem umfassend das genannte Dentalimplantat gemäss Anspruch 8.

Abnehmbare Dentalprothesen werden üblicherweise mit sogenannten Haftcremes oder mechanisch am Restgebiss, welches mit speziellen Ankerelementen zur Verbindungen mit den Dentalprothesen ausgestattet ist, lösbar am Kiefer fixiert. Insbesondere an den hinteren Freiendlücken oder bei besonders flachen Kieferkämmen mit geringem Knochenangebot ist der Einsatz herkömmlicher Dentalimplantate nicht oder nur mit relativ hohem Aufwand möglich.

Die normalen Kaukräfte können weiterhin dazu führen, dass mit fortschreitender Benutzung die Dentalprothese tiefer in den Kieferknochen absinkt. Dadurch wird das unter der Dentalprothese liegende Zahnfleisch gequetscht, was zu äussert unangenehmen Schmerzen beim Träger der Dentalprothese führen kann. In der Folge ist mit einer Knochenrückbildung und reaktiv einer mangelnden posterioren Gebissabstützung mit Gelenkveränderungen zu rechnen.

Daher besteht die Aufgabe der vorliegenden Erfindung darin, ein Dentalimplantat zur Abstützung einer Zahnprothese an einem Kieferknochen bereitzustellen, das besonders einfach im Aufbau, kostengünstig in der Herstellung und sicher in der Installation im Kieferknochen ist und langfristig ein Einsinken der gesamten Versorgung einschliesslich der Dentalprothese verhindert.

Diese Aufgabe wird durch ein Dentalimplantat gemäss dem Anspruch 1 und ein Dentalimplantatsystem gemäss dem Anspruch 8 gelöst. Besonders bevorzugte Ausführungsformen sind mit den in den abhängigen Ansprüchen aufgeführten Merkmalen ausgestattet.

Das erfindungsgemässe Dentalimplantatsystem weist einen im Wesentlichen zylindersymmetrischen, einstückigen Grundkörper auf, der in einen Befestigungsabschnitt und einen Kopfabschnitt gegliedert ist. Der Befestigungsabschnitt dient der Verankerung des Dentalimplantats im Knochengewebe. Der Kopfabschnitt ist im in den Kieferknochen eingesetzten Zustand des Dentalimplantats koronal ausgerichtet und stützt eine auf ihm lastende Dentalprothese gegen den Kieferknochen ab. Erfindungsgemäss überragt dazu der Kopfabschnitt den Befestigungsabschnitt radial bzw. rechtwinklig zur Längsachse des Grundkörpers gemessen. Durch diese Überragung wird eine im Wesentlichen senkrecht zur Längsachse sich erstreckende Abstützfläche gebildet, welche die von der Zahnprothese auf das Dentalimplantat ausgeübten Kräfte auf eine im Vergleich zum Querschnitt des Befestigungsabschnitts grössere Fläche verteilen und damit ein Einsinken der abgestützten Zahnprothese in Richtung des Kieferknochens verhindert.

Das erfindungsgemässe Dentalimplantat ist auf Grund seines einfachen Aufbaus in kleinen Dimensionen und kostengünstig zu fertigen. Dadurch kann das Dentalimplantat auch in Freiendlücken und bei besonders flachen Kieferkämmen mit geringem Knochenangebot zum Einsatz kommen. Aufgrund des zylindersymmetrischen Grundkörpers sind bekannte Bohrtechniken zur Installation in den Kieferknochen einsetzbar.

Das erfindungsgemässe Dentalimplantatsystem umfasst neben dem Dentalimplantat auch einen Dentalbohrer mit einem Bohrstopp zum besonders einfachen Herstellen einer implantatspezifischen Ausnehmung im Kieferknochen sowie ein auf das Dentalimplantat aufsetzbares Ankerelement. Das Ankerelement ermöglicht es, eine lösbare Verbindung zwischen dem Dentalimplantat und der Zahnprothese herzustellen und ermöglicht somit neben der Abstützfunktion auch eine Befestigungsfunktion.

Im Folgenden werden an Hand einer Zeichnung besonders bevorzugte Ausführungsformen des erfindungsgemässen Dentalimplantats beziehungsweise Dentalimplantatsystems detailliert beschrieben. Die Figuren zeigen im Einzelnen:
- Fig. 1: eine Durchsicht durch ein erfindungsgemässes Dentalimplantat mit einer abgerundeten Aufnahmefläche am Kopfabschnitt, die eine Öffnung eines mit einem Innengewinde ausgestatteten Sacklochs umgibt;
- Fig. 2: eine perspektivische Durchsicht durch das in Fig. 1 gezeigte Dentalimplantat;
- Fig. 3: in einer Durchsicht eine weitere Ausführungsform eines erfindungsgemässen Dentalimplantats mit einer kugelsegmentförmigen Aufnahmefläche;
- Fig. 4: eine perspektivische Durchsicht durch das in Fig. 3 gezeigte Dentalimplantat;
- Fig. 5: eine Schnittdarstellung durch einen Teil eines Kieferknochens, durch ein erfindungsgemässes Dentalimplantat und einer Dentalprothese, wobei ein kieferkammseitig in der Dentalprothese eingefasstes Abstützelement auf der Aufnahmefläche des Dentalimplantats aufliegt;
- Fig. 6: eine Seitenansicht des in Fig. 5 angeschnittenen Abstützelements;
- Fig. 7: eine perspektivische Durchsicht durch das in Fig. 6 gezeigte Abstützelement;
- Fig. 8: eine teilweise Durchsicht durch ein erfindungsgemässes Dentalimplantat, bei welchem ein Ankerelement mit einem kugelförmigen Ankerkopf auf das Dentalimplantat aufgeschraubt ist;
- Fig. 9: ein Schnitt durch eine Ampulle zum Transport und zur Aufbewahrung eines erfindungsgemässen Dentalimplantats; und
- Fig. 10: ein Dentalbohrer mit zwei in einer Vortriebsrichtung hintereinander liegenden Bohrabschnitten mit verschiedenen Durchmessern und einem Bohrstopp, wobei der Dentalbohrer der Herstellung einer Ausnehmung im Kieferknochen zum Setzen eines erfindungsgemässen Dentalimplantats dient.

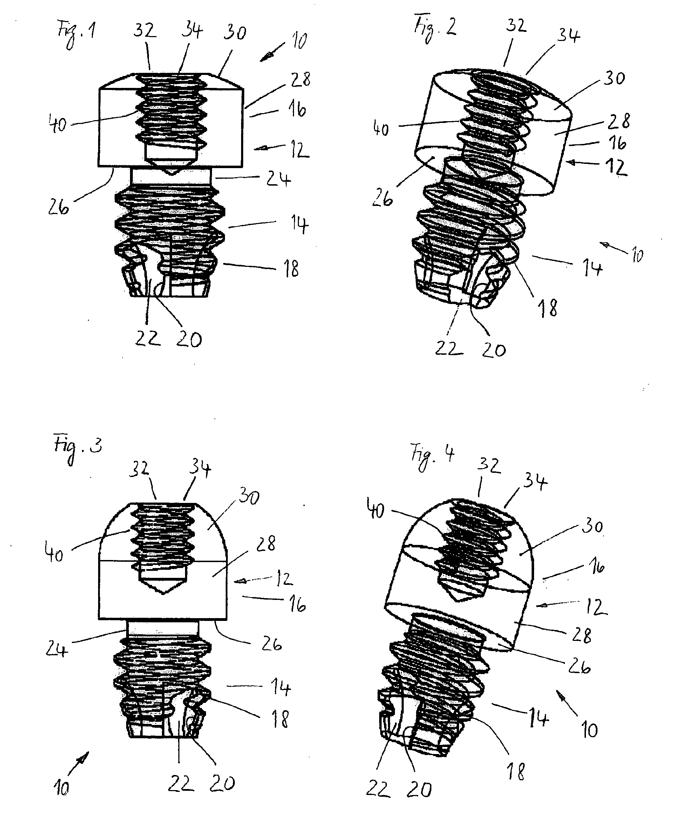

Das in den Figuren 1 - 4 gezeigte erfindungsgemässe Dentalimplantat 10 weist einen im Wesentlichen zylindersymmetrischen, schraubenartigen Grundkörper 12 auf, der in einen Befestigungsabschnitt 14 und einen Kopfabschnitt 16 gegliedert ist. Der Befestigungsabschnitt 14 ist mit einem selbstschneidenden Aussengewinde 18 versehen und dient der Verankerung im Gewebe eines Kieferknochens. Die Selbstschneideeigenschaft des Aussengewindes 18 wird durch Schneidkanten 20 bewirkt, welche eine Nut 22 im Aussengewinde 18 teilweise begrenzen. Die Nut 22 dient der Abführung von Gewebematerial beim Einschrauben des Dentalimplantats 10 in den Kieferknochen und erleichtert das Eindrehen des Dentalimplantats 10. An das Aussengewinde 18 schliesst sich im Befestigungsabschnitt 14 kopfabschnittsseitig ein Hinterschnitt 24 an, der herstellungsbedingt nicht mit Gewindegängen versehen ist.

Der Kopfabschnitt 16 ist pilzkopfartig ausgebildet und überragt mit seinem Querschnitt radial den Querschnitt des Befestigungsabschnitts 14 unter Bildung einer Abstützfläche 26. Bei der besonders bevorzugten Ausführung des Dentalimplantats 10 mit einem zylindersymmetrischen Grundkörper 12 bildet die Abstützfläche 26 einen Kreisring. Der durch die Abstützfläche 26 vergrösserte Querschnitt im Kopfabschnitt 16 führt dazu, dass auf das Dentalimplantat 10 in Richtung seiner Längsachse einwirkende Kräfte einen geringeren Druck auf den Kieferknochen vermitteln, wodurch ein Einsinken des Dentalimplantats und einer daran abgestützten Dentalprothese, also der gesamten Versorgung verhindert wird.

Im Kopfabschnitt 16 schliesst sich in Längsrichtung gegenüberliegend dem Befestigungsabschnitt 14 an die Abstützfläche 26 eine radial aussen umlaufende Kopfmantelfläche 28 an. Die Kopfmantelfläche 28 ist zylindermantelförmig ausgebildet. Sie verläuft bei den in Fig. 1 - Fig. 4 gezeigten Ausführungsformen eines erfindungsgemässen Dentalimplantates 10 wenigstens nahezu parallel zur Längsachse des Grundkörpers 12. Alternativ kann die Kopfmantelfläche 28 auch konisch zulaufend oder mit Kanten ausgestattet sein.

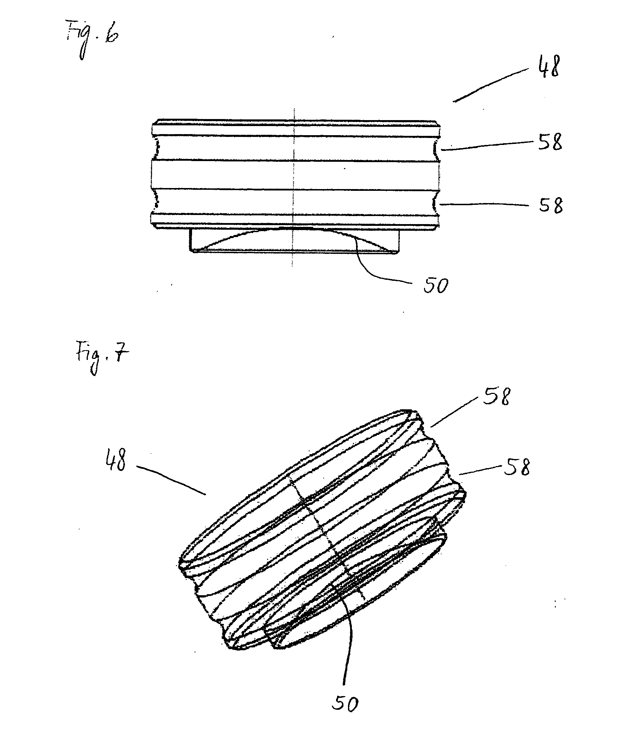

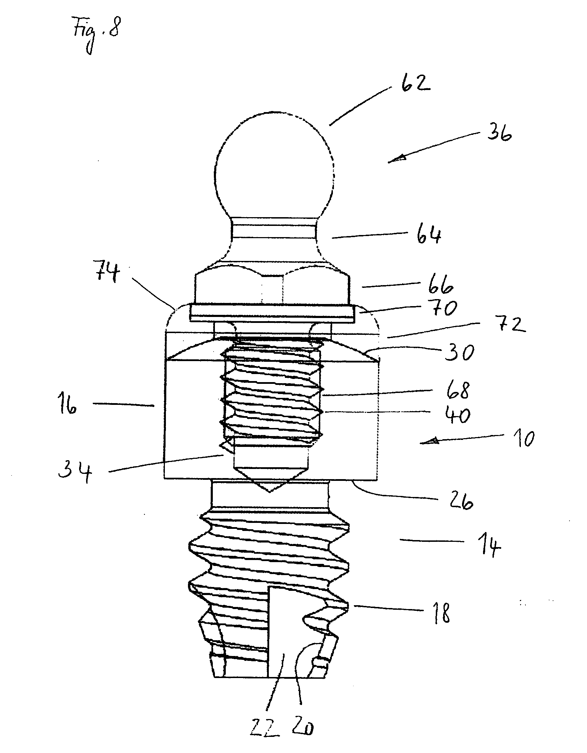

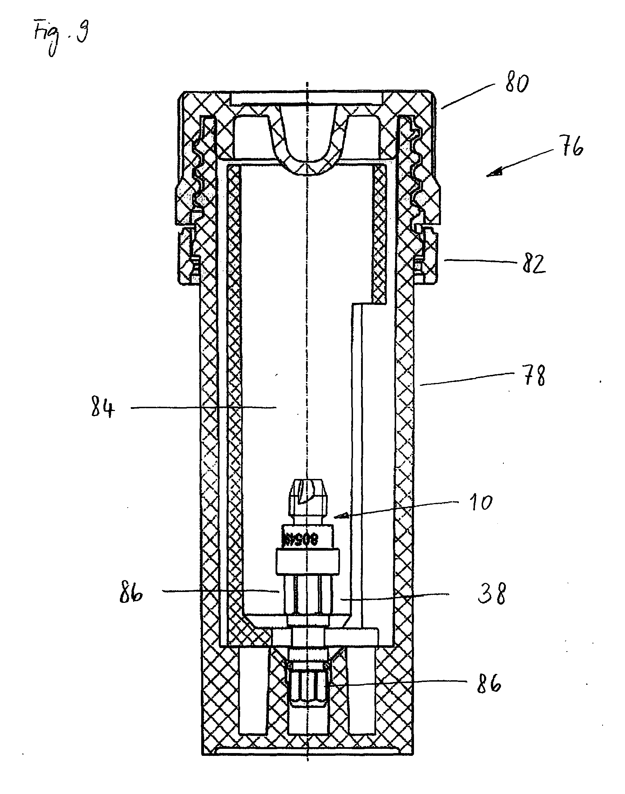

Endbereichseitig, dem Befestigungsabschnitt 14 gegenüberliegend, schliesst sich an die Kopfmantelfläche 28 eine Aufnahmefläche 30 an. Die Aufnahmefläche 30 bildet im in den Kieferknochen eingesetzten Zustand des Dentalimplantates 10 dessen koronal orientierte Begrenzungsfläche. Die Aufnahmefläche 30 umgibt eine Öffnung 32 eines koaxial zur Längsmittelachse des Grundkörpers 12 verlaufenden, in den Kopfabschnitt 16 hineinreichenden Sacklochs 34. Wie in den transparenten Darstellungen des erfindungsgemässen Dentalimplantats 10 sehr gut sichtbar ist, ist das Sackloch 34 zur Bildung einer Schraubverbindung mit einer nicht gezeigten Dentalschraube, einem in Fig. 8 gezeigten Ankerelement 36 oder einem in Fig. 9 gezeigten Eindrehadapter 38 mit einem Innengewinde 40 ausgestattet. Für den in Fig. 5 gezeigten Fall, dass auf das Dentalimplantat 10 kein Ankerelement 36 aufgesetzt werden soll, wird nach dem Setzen des Dentalimplantats 10 und dem Entfernen des Eindrehadapters 38 das Sackloch 34 mit einer biokompatiblen Füllmasse verschlossen.

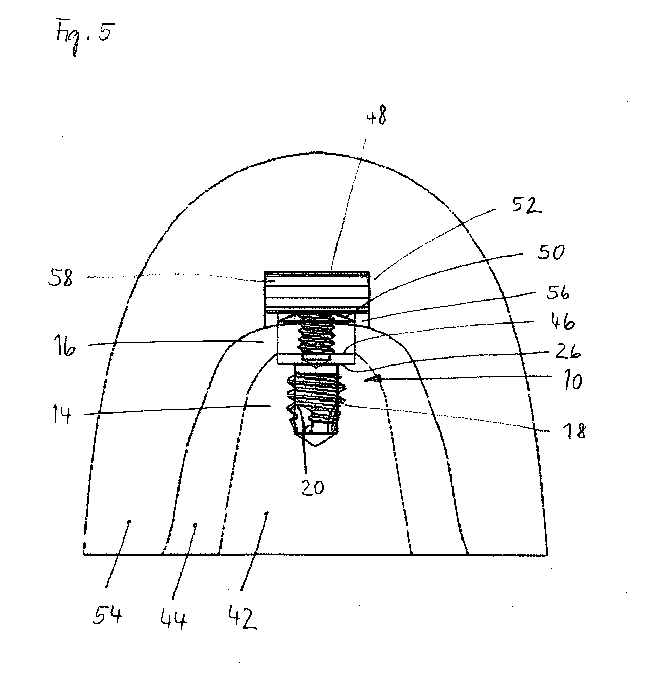

Die Aufnahmefläche 30 kann sich, wie bei der in Fig. 1 und Fig. 2 gezeigten Ausführungsform des erfindungsgemässen Dentalimplantats 10, kreiskegelförmig vom Kopfmantelabschnitt 28 bis zur Öffnung 32 erheben oder, wie bei der in Fig. 3 und Fig. 4 gezeigten Ausführungsform, eine kugelsegmentförmige Oberfläche bilden.

Die Gesamtlänge des Dentalimplantats 10 beträgt zwischen 4 mm und 10 mm, vorzugsweise 6 mm, wobei die Länge des Befestigungsabschnitts entlang der Längsachse des Grundkörpers 12 gemessen 3 mm bis 5 mm, vorzugsweise 3,5 mm, und die Länge des Kopfabschnitts 16, ebenfalls entlang der Längsachse gemessen, zwischen 2 mm und 4 mm, vorzugsweise 2,5 mm beträgt. Der Durchmesser des Kopfabschnitts 16 beträgt zwischen 3 und 6 mm, vorzugsweise 4 mm. Als Innengewinde für das Sackloch 34 wird vorzugsweise M 1,8 gewählt. Das selbstschneidende Aussengewinde im Befestigungsabschnitt 14 ist bevorzugt mit einem Kerndurchmesser von 2,2 mm, einem Aussendurchmesser von 3 mm, einem Flankenwinkel von etwa 60° und einer Steigung von ungefähr 0,7 mm ausgestattet.

Als Materialien zur Herstellung des Dentalimplantats 10 kommen vorzugsweise Titan und Titanlegierungen, Zirkonia oder andere biokompatible Materialien, vorzugsweise Metalllegierungen zum Einsatz.

In Fig. 5 ist das Dentalimplantat 10 der in Fig. 1 und 2 gezeigten Ausführungsform in einen in den Kieferknochen 42 eingesetzten Zustand gezeigt. Dabei ist der Befestigungsabschnitt 14 vollständig im Kieferknochen 42 aufgenommen, während der Kopfabschnitt 16 radial aussen im Wesentlichen vom oberhalb des Kieferknochens 42 befindlichen Zahnfleisch 44 umgeben ist.

Etwa auf der Höhe der Grenzfläche, zwischen dem Kieferknochen 42 und dem Zahnfleisch 44, ist eine Niveaulinie 46 sichtbar, bis zu welcher der Kopfabschnitt 16 in das Knochengewebe eingebettet ist. In Längsrichtung gemessen beträgt die Einbettungstiefe etwa 0,2 mm bis 0,8 mm, vorzugsweise 0,5 mm.

Der unterhalb der Niveaulinie 46 vom Gewebe des Kieferknochens 42 umgebene Teil der Oberfläche des Dentalimplantats 10 ist durch eine Aufrauung (z.B. durch Ätzung), andere Formen von Oberflächenbehandlungen (z.B. durch Sandstrahlen) und/oder durch eine Beschichtung (z.B. Plasma-Spray-Verfahren) spezifisch funktionalisiert, um durch eine intensivierte Wechselwirkung des Knochengewebes mit der funktionalisierten Oberfläche die Verankerung des Dentalimplantats 10 im Kieferknochen 42 zu verbessern (Osseointegration). Die stärkste biomechanische Bindung wird bei einer Oberflächenrauigkeit von etwa 1,5 µm (Mittenrauwert Rₐ) erreicht (G. Hansson, J. Biochem. 2000, 33: 1297-1303); eine optimale Oberflächenstruktur liegt bei einem Mittenrauwert Rₐ von etwa 1 µm und einer gemittelten Rautiefe R_{z} von 11 µm vor (A. Wennerberg, hesis Univ. Göteborg, 1996). Die Angaben für die Mittenrauwerte und die gemittelte Rautiefe entsprechen der Definition gemäss DIN 4768. Alternativ kann natürlich auch ein kleinerer oder grösserer Teil der Oberfläche des Dentalimplantats 10 mit einer funktionalisierten beziehungsweise aufgrauten Oberfläche ausgestattet sein.

Gemäss der in Fig. 5 gezeigten Schnittdarstellung wird das Dentalimplantat 10 vorzugsweise so tief in den Kieferknochen 42 hineingeschraubt, dass in etwa die Aufnahmefläche 30 über die äussere Oberfläche des Zahnfleischs 44 herausragt. Unmittelbar auf der als Matrize wirkenden Aufnahmefläche 30 liegt ein als Patrize fungierendes Abstützelement 48.

Das Abstützelement 48 ist dentalimplantatseitig mit einer Auflagefläche 50 ausgestattet, welche eine der Aufnahmeflächen 30 entsprechende Negativform aufweist. Auf Grund der konvexen Ausbildung der Aufnahmefläche 30 und der entsprechend konkaven Ausbildung der Auflagefläche 50 übernimmt diese Matrize-Patrize-Konstruktion neben einer reinen Abstützfunktion auch eine gewisse Zentrierfunktion.

Um bei der in Fig. 5 gezeigten abnehmbaren Lösung für die Auflage der Dentalprothese 54 mittels des Abstützelements 48 auf dem Dentalimplantat 10 ein Eindringen von Flüssigkeiten, Bakterien und Speiseresten zu verhindern, ist - wie bereits erwähnt - das Sackloch 34 im Kopfabschnitt 16 des Dentalimplantats 10 mit einer geeigneten Füllmasse verschlossen.

Das im Schnittbild von Fig. 5 gezeigte, einen im Wesentlichen rechteckigen Querschnitt aufweisende, scheibenartige Abstützelement 48 ist entweder in eine entsprechende Prothesenausnehmung 52 der Prothese 54 eingepresst und gegebenenfalls verklebt oder unmittelbar bei der Herstellung der Prothese 54 mit eingegossen worden. Insbesondere im letztgenannten Fall können Hohlräume 56 zwischen der äusseren Oberfläche des Zahnfleischs 44 und der zahnfleischseitigen, über die Aufnahmefläche 30 hervorstehenden Auflagefläche 50 mit biokompatiblem Füllmaterial aufgefüllt sein.

Als Materialien für das Abstützelement 48 werden - wie für das Dentalimplantat 10 selbst - vorzugsweise Titan und Titanlegierungen, Zirkonia oder andere biokompatible Materialien, vorzugsweise Metalllegierungen verwendet.

Das Abstützelement 48 hat einen Aussendurchmesser zwischen 4 mm und 5,5 mm, vorzugsweise von 5,5 mm. Die Höhe des Abstützelements 48 beträgt zwischen 2 mm und 4 mm, vorzugsweise 2,5 mm.

In Fig. 6 und 7 sind die Details des Abstützelements 48 gezeigt. Neben der konkav gekrümmten Auflagefläche 50 sind auch zwei radial aussen umlaufende Haltenuten 58 sichtbar. Diese Haltenuten 58 dienen einer besseren Verankerung des Abstützelements 48 in der Dentalprothese 54.

Neben der oben beschriebenen Abstützfunktion kann das Dentalimplantat 10 durch Verbindung mit einem, wie beispielsweise in Fig. 8 gezeigten kugelkopfförmigen Ankerelement 36, zusätzlich eine Befestigungsfunktion übernehmen. In diesem Fall ist das nicht gezeigte Abstützelement 48 in der Dentalprothese 54 beispielsweise mit einer elastisch verformbaren oder federnden, hohlkugelförmigen Auflagefläche 50 ausgebildet, so dass eine lösbare Verbindung, beispielsweise eine Klickverbindung, zwischen dem mit dem Ankerelement 36 fest verbundenen Dentalimplantat 10 und der Dentalprothese 54 hergestellt ist.

Beim Ankerelement 36 schliesst sich, wie in Fig. 8 gezeigt, implantatseitig an den hier kugelförmigen Ankerkopf 62 ein verjüngter Ankerhals 64 und an diesen wiederum ein im Wesentlichen sechskantförmiger Ankeransatz 66 an. Dieser Ankeransatz 66 dient insbesondere dem Zusammenwirken mit einem Schraubwerkzeug, beispielsweise einem Schraubenschlüssel, beim Einschrauben des Ankerelements 36 in das dafür vorbestimmte Sackloch 34 im Kopfabschnitt 16 des Dentalimplantats 10.

Vor dem Übergang des Ankeransatzes 66 in eine mit einem entsprechenden Aussengewinde versehene Ankerwurzel 68 erweitert sich das Ankerelement 36 zu einer ringförmigen Ankerscheibe 70. Die Ankerscheibe 70 sitzt bei der in Fig. 8 gezeigten Abbildung in einer entsprechenden inneren, zentrisch positionierten Ausnehmung einer Unterlegscheibe 72, welche der Sicherung des Ankerelements 36 am Dentalimplantat 10 gegen ein unbeabsichtigtes Lösen des Ankerelements 36 dient. In der gezeigten Ausführungsform ist die Unterlegscheibe 72 an der Ankerscheibe 70 des Ankerelements 36 über eine Verbördelung befestigt. Alternativ ist es natürlich auch möglich, die Unterlegscheibe 72 direkt am Ankerelement 36, das heisst einstückig auszuformen oder die Unterlegscheibe 72 und das Ankerelement 36 als zwei einzelne Elemente auszubilden. Die Unterlegscheibe 72, wie auch das Ankerelement 36, sind vorzugsweise aus einer biokompatiblen Metalllegierung oder anderen geeigneten biokompatiblen Werkstoffen (z.B. Keramik) hergestellt. Sie weist neben einem Durchgangsloch auch ankerkopfseitig aussen eine Verrundung 74 auf. Die dentalimplantatseitige Unterseite der Unterlegscheibe 72 ist mit einer Negativform der Aufnahmefläche 30 des Dentalimplantats 10 ausgestattet.

Nach einer Herstellung des Dentalimplantats 10 und vor dessen Einsetzen in die entsprechende Bohrung im Kieferknochen 42, wird das Dentalimplantat 10 - zusammen mit seinem Eindrehadapter 38 - in einer in Fig. 9 gezeigten Ampulle 76 in einem vorzugsweise sterilen Zustand aufbewahrt und transportiert. Die Ampulle 76 weist einen im Wesentlichen zylinderförmigen Ampullenkörper 78 auf, der einseitig geschlossen und auf der gegenüberliegenden Seite mit einer Ampullenkappe 80 verschliessbar ist. Dazu ist der Ampullenkörper 78, wie auch die Ampullenkappe 80, mit jeweils aufeinander abgestimmten Schraubgewinden versehen. Beim erstmaligen Abschrauben der Ampullenkappe 80 vom Ampullenkörper 78 wird ein beide Elemente formschlüssig miteinander verbindender Sicherungsring 82 irreversibel von der Ampullenkappe 80 gelöst.

Im Inneren des Ampullenkörpers 78 befindet sich ein herausnehmbarer Ampulleneinsatz 84. In diesem Ampulleneinsatz 84 ist der Eindrehadapter 38 ebenfalls entnehmbar eingesteckt. Der Eindrehadapter 38 ist mit einem in Fig. 9 nicht sichtbaren Schraubfortsatz ausgestattet, dessen Aussengewinde mit dem Innengewinde des Sacklochs 34 des Dentalimplantats 10 derart zusammenwirkt, dass eine lösbare Schraubverbindung zwischen dem Eindrehadapter 38 und dem Dentalimplantat 10 hergestellt wird. Zudem weist der Eindrehadapter 38 zwei sechskantige Angriffsabschnitte 86 auf, welche es im Zusammenspiel mit einem bekannten Dentalwerkzeug ermöglichen, das Dentalimplantats 10 in den Kieferknochen 42 einzuschrauben.

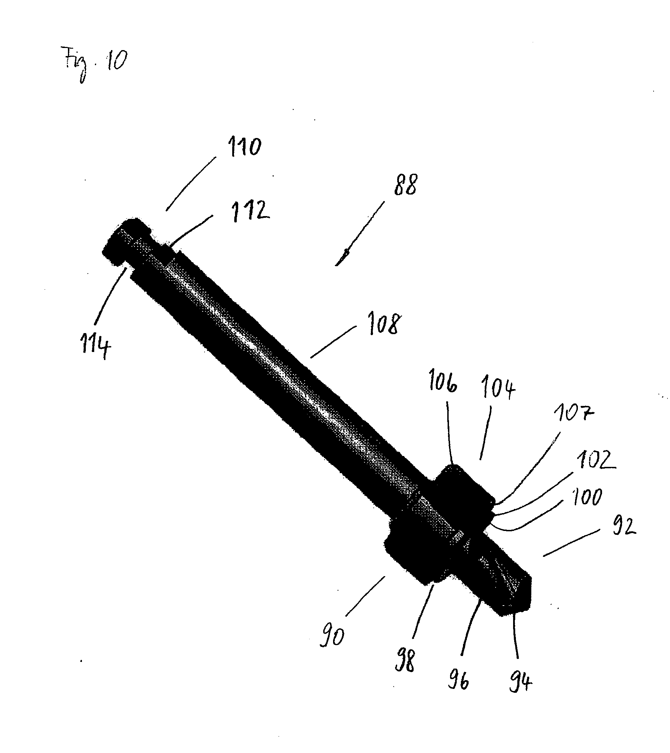

Bevor das Dentalimplantat 10 in den Kieferknochen 42 eingeschraubt werden kann, wird zunächst an der dafür vorgesehenen Stelle das Zahnfleisch 44 entfernt und mit dem in Fig. 10 gezeigten Dentalbohrer 88 eine entsprechende Ausnehmung im Kieferknochen 42 gebohrt. Der Dentalbohrer 88 weist entlang seiner Längsachse im bohrseitigen Endbereich einen Bohrkopf 90 auf. Der Bohrkopf 90 ist durch drei verschiedene Querschnittsbereiche in drei Abschnitte untergliedert: einen ersten Bohrabschnitt, der spiralbohrerartig endbereichsseitig spitz zuläuft und dort mit ersten Schneidkanten 94 und wendeförmigen ersten Bohrnuten 96 zur Wegleitung von Bohrspänen ausgestattet ist, einen zweiten Bohrabschnitt 98, dessen Querschnitt grösser als der des ersten Bohrabschnitts 92 ist und der mit zweiten Schneidkanten 100 und zweiten Bohrnuten 102, die etwa in Fortsetzung der ersten Bohrnuten 96 ausgebildet sind, ausgestattet ist, und einen Bohrstopp 104, dessen Querschnitt wiederum grösser als derjenige des zweiten Bohrabschnitts 98 ist und in Fortsetzung der zweiten Bohrnuten 102 mit dritten Bohrnuten 106 ausgestattet ist, aber im Gegensatz zum zweiten Bohrabschnitt 98 keine Schneidkanten 100, sondern sich radial erstreckende Anschlagflächen 107 aufweist.

Der erste Bohrabschnitt 92 dient dem Ausbohren einer Ausnehmung im Kieferknochen 42 mit etwa dem Kerndurchmesser des selbstschneidenden Aussengewindes 18 des Dentalimplantates 10. Der sich in Längsrichtung an den ersten Bohrabschnitt 92 anschliessende zweite Bohrabschnitt 98 führt beim weiteren Bohrvorgang zu der vorgängig beschriebenen zahnfleischseitig vergrösserten Ausnehmung, welche die teilweisen Einbettung des Kopfabschnitts 16 bis zur in Fig. 5 gezeigten Niveaulinie 46 ermöglicht. Der Bohrstopp 104 dient mit seinen Anschlagflächen 107 als Endanschlag, so dass am Ende des Bohrvorgangs die Ausnehmung im Kieferknochen 42 exakt die benötigte Tiefe zur Aufnahme des Dentalimplantates 10 aufweist und eine unerwünschte weitere Vertiefung des Bohrlochs im Kieferknochen 42 verhindert wird.

An den Bohrkopf 90 des Dentalbohrers 88 schliesst sich ein zylindrischer Bohrerschaft 108 an, welcher auf der dem Bohrkopf 90 gegenüberliegenden Seite in einer Werkzeugkupplung 110 endet. Die Werkzeugkupplung 110 ist dazu bestimmt, von einem genormten Futter eines Antriebselements aufgenommen zu werden. An der Werkzeugkupplung 110 ist eine zylindersegmentförmige Ausnehmung im kreiszylinderförmigen Bohrerschaft 108 unter Formung einer im Wesentlichen ebenen Kupplungsfläche 112 ausgebildet. Die Kupplungsfläche 112 dient dazu, beim Zusammenwirken mit einer entsprechenden Gegenfläche des aufnehmenden Futters ein Drehmoment auf den Dentalbohrer 88 zu übertragen. Weiterhin ist an der Werkzeugkupplung 110 eine in Umfangsrichtung verlaufende Kupplungsnut 114 ausgebildet, welche der axialen Sicherung des Dentalbohrers 88 im Futter dient.

Im Allgemeinen werden Ausführungsformen des oben beschriebenen erfindungsgemässen Dentalimplantats 10, ein auf die spezifischen Masse des Dentalimplantats 10 abgestimmter Dentalbohrer 88 und ein ebenfalls für das spezifische Dentalimplantat 10 konstruiertes Ankerelement 36 zusammen als ein Dentalimplantatsystem hergestellt und vertrieben. Auf diese Weise ist ein passgenaues Einsetzen des Dentalimplantats 10 in eine mittels dem dazugehörigen Dentalbohrer 88 hergestellten Ausnehmung im Kieferknochen 42 und ein einfaches Aufsetzen des Ankerelements 88 auf das Dentalimplantat 10 gewährleistet. Neben der vergleichsweise kostengünstigen Herstellung des relativ einfach aufgebauten Dentalimplantats 10 wird durch die Herstellung und den Vertrieb des entsprechenden Dentalimplantatsystems die Installation des Dentalimplantats 10 vereinfacht, standardisiert, zuverlässiger und preiswerter gestaltet.

## Patentansprüche

1. Dentalimplantat zur Abstützung einer Dentalprothese (54) an einem Kieferknochen (42), mit einem im Wesentlichen zylindersymmetrischen Grundkörper (12), der entlang seiner Längsachse einen zur Verankerung im Kieferknochen vorbestimmtem Befestigungsabschnitt (14) und einem im gegenüberliegenden Endbereich angeordneten Kopfabschnitt (16) aufweist, wobei der Kopfabschnitt (16) den Befestigungsabschnitt (14) radial bezüglich der Längsachse des einteiligen Grundkörpers (12) unter Bildung einer Abstützfläche (26) überragt und die Abstützfläche (26) sich im Wesentlichen senkrecht zur Längsachse erstreckt.

2. Dentalimplantat nach Anspruch 1, **gekennzeichnet durch** eine Gesamtlänge zwischen 4 mm und 10 mm, vorzugsweise 6 mm, einen Durchmesser des Kopfabschnitts (16) zwischen 3 mm und 6 mm, vorzugsweise 4 mm, und einen Querschnitt des Befestigungsabschnitts (14) zwischen 2 mm und 4 mm, vorzugsweise 3 mm.

3. Dentalimplantat nach einem Anspruch 1 oder 2, **dadurch gekennzeichnet, dass** der Befestigungsabschnitt (14) mit einem vorzugsweise selbstschneidenden Aussengewinde (18) ausgestattet ist.

4. Dentalimplantat nach einem der Ansprüche 1 bis 3, **dadurch gekennzeichnet, dass** die Oberfläche des Befestigungsabschnitts (14), die Abstützfläche (26) und wenigstens teilweise eine an die Abstützfläche (26) angrenzende Kopfmantelfläche (28) des Kopfabschnitts (16) mit einer funktionalisierten, vorzugsweise aufgerauten Oberfläche, die einen Mittenrauwert von 1,5 µm bis 2 µm, vorzugsweise von etwa 1 µm, und eine gemittelte Rautiefe von 5 µm bis 15 µm, vorzugsweise von etwa 11 µm, aufweist, ausgestattet ist.

5. Dentalimplantat nach einem der Ansprüche 1 bis 4, **dadurch gekennzeichnet, dass** das Dentalimplantat (10) mit einem Sackloch (34) ausgestattet ist, welches eine Öffnung (32) in einer endbereichseitigen Aufnahmefläche (30) des Kopfabschnitts (16) besitzt und dass diese Aufnahmefläche (30) eben oder konvex gewölbt ist.

6. Dentalimplantat nach Anspruch 5, **dadurch gekennzeichnet, dass** sich die Aufnahmefläche (30) von der Öffnung (32) in Richtung des Befestigungsabschnitts (14) konisch nach aussen erweitert oder kugelsegmentartig ausgebildet ist.

7. Dentalimplantat nach Anspruch 5 oder 6, **dadurch gekennzeichnet, dass** das Sackloch (34) zur Verbindung mit einem Ankerelement (36), welches neben der Abstützung auch der Befestigung der Dentalprothese (54) am Dentalimplantat (10) dient, mit einem Innengewinde (40) ausgestattet ist.

8. Dentalimplantatsystem, umfassend einen Dentalbohrer (88) mit einem Bohrstopp (104), ein Dentalimplantat (10) nach Anspruch 7 und ein Ankerelement (36), welches am Dentalimplantat (10) befestigt ist und zur Ausbildung einer vorzugsweise lösbaren Verbindung zwischen der Dentalprothese (54) und dem Dentalimplantat (10) dient.

9. Dentalimplantatsystem nach Anspruch 8, **dadurch gekennzeichnet, dass** das Ankerelement (36) einen kugel- oder kugelsegmentförmigen Ankerkopf (62) aufweist.

10. Dentalimplantatsystem nach Anspruch 8 oder 9, **dadurch gekennzeichnet, dass** der Dentalbohrer (88) zwei in Vortriebsrichtung hintereinanderliegende, Bohrerabschnitte (92, 98) mit verschiedenen Durchmessern und einen Bohrstop (104) aufweist.
